# EUROPÄISCHE PATENTSCHRIFT

(11) **EP 3 768 113 B1**
(45) Veröffentlichungstag und Bekanntmachung des Hinweises auf die Patenterteilung: **09.02.2022**
(21) Anmeldenummer: 19715824.9
(22) Anmeldetag: 18.03.2019
(51) Int. Cl.: A45F 5/00, A47J 47/18, A47L 13/51

(54) **BEFESTIGUNGSELEMENT FÜR EIN ZUBEHÖRTEIL FÜR EINEN EIMER, ZUBEHÖRTEIL UND EIMER**
FASTENING ELEMENT FOR AN ACCESSORY PART FOR A PAIL, ACCESSORY PART AND PAIL
ÉLÉMENT DE FIXATION POUR UN ACCESSOIRE DESTINÉ À UN SEAU, ACCESSOIRE ET SEAU

(30) Priorität: 19.03.2018 LU 100741
(43) Veröffentlichungstag der Anmeldung: 27.01.2021
(73) Patentinhaber: Hackner, Thomas, 65510 Idstein (DE)
(72) Erfinder: HACKNER, Dietmar, 65529 Waldems (DE); GOTTWALD, Marcus, 64372 Ober-Ramstadt (DE); SCHNUR, Jens, 64760 Oberzent (DE); HACKNER, Thomas, 65510 Idstein (DE)
(74) Vertreter: Habermann Intellectual Property Partnerschaft von Patentanwälten mbB
(86) Internationale Anmeldenummer: PCT/EP2019/056693
(87) Internationale Veröffentlichungsnummer: WO 2019/179935

(56) Entgegenhaltungen:
- WO-A1-2017/089619
- FR-A1- 2 565 812
- GB-A- 2 489 979
- US-A- 3 688 942

## Beschreibung

Die Erfindung betrifft ein Befestigungselement eines Zubehörteils für einen Eimer, wobei sich das Befestigungselement längs eines Kreisbogens erstreckt, wobei das Befestigungselement ein erstes Profilelement mit einem U-förmigen Querschnitt mit durch einen ersten Profilsteg miteinander verbundenen und einander gegenüberliegend angeordneten ersten und zweiten Profilschenkeln aufweist, wobei der erste und der zweite Profilschenkel in einem für den Eimer vorgesehenen ersten Aufnahmebereich eines ersten Eimerrands in einer radialen Richtung des Befestigungselements einen ersten Mindestabstand zueinander aufweisen, wobei das Befestigungselement ein zweites Profilelement mit einem U-förmigen Querschnitt mit durch einen zweiten Profilsteg miteinander verbundenen und einander gegenüberliegend angeordneten dritten und vierten Profilschenkeln aufweist, wobei der dritte und der vierte Profilschenkel in einem für den Eimer vorgesehenen zweiten Aufnahmebereich eines zweiten Eimerrands in der radialen Richtung einen zweiten Mindestabstand zueinander aufweisen, und wobei der zweite Mindestabstand größer ist als der erste Mindestabstand, wobei an mindestens einem Profilschenkel mindestens ein Anlageteil ausgebildet ist, wobei das Anlageteil in Richtung des gegenüberliegenden Profilschenkels des jeweiligen Profilelements ausgerichtet ist.

Aus der Praxis sind Eimer, insbesondere für die Wäsche oder Pflege von Kraftfahrzeugen, hinreichend bekannt. Verwendung finden hierfür beispielsweise US-Gallonen-Eimer amerikanischer Bauart. Die Autowäsche findet häufig an öffentlichen Waschplätzen statt. An diesen Waschplätzen wird Waschwasser zur Verfügung gestellt, das in den Wascheimern abgefüllt und zur Fahrzeugwäsche verwendet werden kann. Da das an den Waschplätzen zur Verfügung gestellte Waschwasser häufig lediglich Brauchwasserqualität aufweist, verwenden einige besonders anspruchsvolle Autobesitzer auch eigens für die Autowäsche in den eigenen Wascheimern mitgeführtes Waschwasser.

Für den Transport der mit der Waschflüssigkeit befüllten Eimer in dem Kraftfahrzeug weisen die Eimer üblicherweise Deckel auf, die den Eimer wasserdicht verschließen, um ein Überlaufen der Waschflüssigkeit zu vermeiden. Verwendung finden hierbei zumeist zweiteilige Deckel, wobei ein Deckelrand dichtend auf den Eimerrand geklemmt wird und wobei ein Deckelinnenteil dichtend in den Deckelrand geschraubt werden kann.

In der Druckschrift US 3 688 942 A wird ein Eimer mit einem Deckel beschrieben, wobei ein Befestigungselement des Deckels an den Eimerrand angepasst ist. Der in dieser Druckschrift beschriebene Deckel ist einteilig hergestellt.

Bei der Wäsche oder Pflege von Kraftfahrzeugen werden verschiedene Schwämme, Tücher und Bürsten eingesetzt. Um beispielsweise solche Reinigungsteile zeitweise an dem Eimer festlegen zu können ist es bekannt, derartige Zubehörteile mit geeigneten Befestigungselementen an dem Eimerrand festzulegen. Aus der Praxis sind jedoch keine Befestigungselemente für Zubehörteile bekannt, welche ein schnelles und einfaches lösbares Festlegen sowohl an dem Eimerrand als auch an dem Eimer mit einem festgelegten Deckelrand erlauben.

In der Druckschrift GB 2 489 979 A wird ein Befestigungselement beschrieben, das an unterschiedlich geformten Eimerrändern angeordnet werden kann. Insbesondere eignet sich das in dieser Druckschrift beschriebene Befestigungselement zur Befestigung sowohl an einem Kunststoffeimer als auch an einem Metalleimer.

Als Aufgabe der vorliegenden Erfindung wird es angesehen, ein Befestigungselement so auszugestalten, dass es schnell und einfach lösbar sowohl an dem Eimerrand als auch an dem Eimer mit dem festgelegten Deckelrand festlegbar ist.

Diese Aufgabe wird erfindungsgemäß dadurch gelöst, dass das Befestigungselement ein dem Zubehörteil gegenüberliegendes erstes Schenkelelement aufweist, wobei durch das erste Schenkelelement jeweils ein Profilschenkel des ersten und des zweiten Profilelements ausgebildet wird, wobei an dem ersten Schenkelelement eine Ausformung ausgebildet ist, wobei die Ausformung ein erstes Anlageteil des ersten Profilelements bildet und bei bestimmungsgemäßer Verwendung des Befestigungselements den ersten Eimerrand hintergreifen kann, wobei die Ausformung des ersten Schenkelelements ein drittes Anlageteil bezüglich des zweiten Eimerrands bildet, wobei das erste Schenkelelement unter einem stumpfen Winkel mit dem ersten Profilsteg verbunden ist und wobei der erste Profilsteg das erste Schenkelelement mit einem zweiten Schenkelelement verbindet, wobei das zweite Schenkelelement den zweiten Profilschenkel des ersten Profilelements wie auch ein viertes Anlageteil des zweiten Profilelements bildet, wobei der erste Profilsteg einen Abschnitt des zweiten Profilstegs bildet und sich ein über den ersten Profilsteg hinaus erstreckender Abschnitt des zweiten Profilstegs unter einem stumpfen Winkel an den ersten Profilsteg anschließt und wobei der zweite Profilsteg das erste Schenkelelement mit dem vierten Profilschenkel unter einem stupfen Winkel verbindet, wobei der vierte Profilschenkel ein zweites Anlageteil aufweist, welches den zweiten Eimerrand bei bestimmungsgemäßer Verwendung des Befestigungselements hintergreifen kann.

Ein derartiges Befestigungselement ist so ausgestaltet, dass es sowohl an den in der Praxis genutzten US-Gallonen-Eimern schnell und einfach lösbar festgelegt werden kann, als auch an derartigen, mit einem Deckelrand versehenen Eimern. Dies wird dadurch erreicht, dass der erste Eimerrand zwischen dem ersten Profilschenkel, welcher Teil des ersten Schenkelelements ist, und dem zweiten Profilschenkel in einem ersten Aufnahmebereich festgelegt werden kann, wobei der Falz des ersten Eimerrands von einem an dem ersten Schenkelelement ausgeformten Anlageteil hintergriffen wird. Weiterhin kann der zweite Eimerrand in einem zweiten Aufnahmebereich zwischen dem dritten Profilschenkel und dem vierten Profilschenkel festgelegt werden, wobei der zweite Eimerrand in Richtung der Eimeröffnung an dem zweiten Profilschenkel anliegt und von einem an dem vierten Profilschenkel ausgeformten zweiten Anlageteil auf der Innenseite des Eimers hintergriffen wird. Das Befestigungselement hintergreift jeweils einen der beiden Eimerränder und sichert das an dem Befestigungselement angefügte Zubehörteil gegen unbeabsichtigtes Lösen.

Das erfindungsgemäße Befestigungselement weist eine einfache konstruktive Ausgestaltung auf und kann gleichermaßen für ein schnelles und einfaches, zeitweises Festlegen an dem ersten Eimerrand, welcher durch ein oben offenes Ende des Eimers ausgebildet wird, wie auch an dem zweiten Eimerrand, welcher durch das oben offene Ende des Eimers mit einem festgelegten Deckelrand ausgebildet wird, verwendet werden. Das Befestigungselement weist das erste und das zweite Profilelement auf, wobei das erste Profilelement das lösbare Festlegen an dem ersten Eimerrand und das zweite Profilelement das lösbare Festlegen an dem zweiten Eimerrand ermöglicht. Der erste Eimerrand wird in einem ersten Aufnahmebereich zwischen dem ersten und dem zweiten Profilschenkel und der zweite Eimerrand in einem zweiten Aufnahmebereich zwischen dem dritten und dem vierten Profilschenkel festgelegt. Bei bestimmungsgemäßer Verwendung des Befestigungselements liegt der erste Profilschenkel des ersten Profilelements und/oder der dritte Profilschenkel des zweiten Profilelements außerhalb des Eimers. Der zweite oder der vierte Profilschenkel greifen in einen Innenraum des Eimers ein.

Der Deckelrand weist eine größere Breite auf als der Eimerrand. Daher ist bei dem erfindungsgemäßen Befestigungselement vorgesehen, dass der zweite Mindestabstand größer ist als der erste Mindestabstand. Der erste Mindestabstand ist vorteilhafterweise an die Breite des Eimerrands angepasst während der zweite Mindestabstand vorteilhafterweise an die Breite des Deckelrands angepasst ist.

Das erste Profilelement und das zweite Profilelement können erfindungsgemäß in einer Umfangsrichtung des Befestigungselements nebeneinander ausgebildet sein. Es ist jedoch auch möglich und besonders vorteilhafterweise vorgesehen, dass die Profilelemente in der radialen Richtung benachbart zueinander angeordnet sind. Durch die benachbarte Anordnung der Profilelemente kann eine gesamte Länge des Befestigungselements in der Umfangsrichtung sowohl zur Befestigung an dem Eimerrand als auch an dem Deckelrand verwendet werden.

Erfindungsgemäß weist das Befestigungselement mindestens ein erstes Schenkelelement auf, wobei das erste Schenkelelement jeweils einen Profilschenkel des ersten und des zweiten Profilelements bildet. Das Schenkelelement wird dabei sowohl als Profilschenkel des ersten Profilelements als auch als Profilschenkel des zweiten Profilelements verwendet. Sofern die Profilelemente in der Umfangsrichtung nebenaneinander angeordnet sind, können die Profilelemente durch das erste Schenkelelement miteinander verbunden werden, um die Stabilität des Befestigungselements zu erhöhen.

Bei einer zumindest teilweisen Überlappung der beiden Profilelemente in der radialen Richtung kann durch die Verwendung des gemeinsamen ersten Schenkelelements eine Gesamtbreite des Befestigungselements in der radialen Richtung reduziert werden, da der erste und der zweite Mindestabstand jeweils von dem gemeinsamen ersten Schenkelelement aus vorgegeben werden können.

Vorteilhafterweise ist vorgesehen, dass das erste Schenkelelement den zweiten Profilschenkel des ersten Profilelements und den dritten Profilschenkel des zweiten Profilelements bildet. Es ist auch möglich und erfindungsgemäß vorgesehen, dass mindestens ein Profilschenkel und/oder mindestens ein Schenkelelement und/oder mindestens ein Profilsteg abgekantet oder abgewinkelt ist.

Eine besonders vorteilhafte Ausgestaltung der Erfindung sieht vor, dass der erste Profilsteg des ersten Profilelements einen Abschnitt des zweiten Profilstegs des zweiten Profilelements bildet. Durch die Integration des ersten Profilstegs in den zweiten Profilsteg kann die Erstreckung des Befestigungselements in der radialen Richtung weiter verkürzt werden.

Vorteilhafterweise kann erfindungsgemäß vorgesehen sein, dass bei bestimmungsgemäßer Verwendung des Befestigungselements der erste und der dritte Profilschenkel außerhalb und der zweite und der vierte Profilschenkel innerhalb des Eimers liegen, wobei das Befestigungselement ein Schenkelelement aufweist, welches den ersten und den dritten Profilschenkel bildet.

Eine vorteilhafte Umsetzung des Erfindergedankens sieht vor, dass durch die Profilschenkel verlaufende Ausgleichsebenen des ersten und/oder des zweiten U-förmigen Profilelements in einem Winkel von 0,1 Grad bis 25 Grad zueinander angeordnet sind, wobei sich der Abstand der Profilschenkel mit zunehmendem Abstand von dem jeweiligen Profilsteg vergrößert. Die Profilschenkel können erfindungsgemäß einen ebenen, abgekanteten oder auch abgerundeten Verlauf aufweisen. Durch die Profilschenkel verlaufende Ausgleichsebenen, die jeweils einen möglichst minimalen Abstand zu den jeweiligen Profilschenkeln aufweisen, schneiden sich dabei vorteilhafterweise. Die in Richtung der Öffnung des U-förmigen Profils aufspreizenden Profilschenkel des ersten und/oder des zweiten Profilelements können an eine halbrunde Formgebung des jeweiligen Eimerrands angepasst werden. Des Weiteren wird ein Einführen des jeweiligen Eimerrands in den dazugehörigen Aufnahmebereich durch die Anordnung der Profilschenkel unter einem Winkel zueinander erleichtert. Weiterhin kann durch eine elastische Verformung der jeweiligen Profilschenkel bei dem Einführen des dazugehörigen Eimerrands das Befestigungselement kraftschlüssig auf dem dazugehörigen Eimerrand festgeklemmt werden.

Bei dem erfindungsgemäßen Befestigungselement ist vorgesehen, dass an mindestens einem Profilschenkel mindestens ein Anlageteil ausgebildet ist, wobei das Anlageteil in Richtung des gegenüberliegenden Profilschenkels des jeweiligen Profilelements ausgerichtet ist.

Der erste Eimerrand wird durch einen von einer Eimerwand nach außen weisenden, näherungsweise halbrunden Falz ausgebildet, wobei der Eimerrand und der Falz einstückig ausgeformt sind und der Eimerrand in den Falz übergeht. Wird der erste Eimerrand in den ersten Aufnahmebereich des ersten Profils eingeführt, so kann der halbrunde Abschnitt des ersten Eimerrands durch eine elastische Verformung der beiden Profilschenkel des ersten Profilelements kraftschlüssig festgelegt werden. In einer weiteren vorteilhaften Ausgestaltungsform des Befestigungselements kann an dem der Eimerwand gegenüberliegenden ersten Profilschenkel ein erstes Anlageteil ausgebildet sein, welches den Falz hintergreift, wodurch das Befestigungselement formschlüssig an dem Eimerrand festlegt werden kann. In einer weiteren vorteilhaften Ausgestaltungsform des Befestigungselements ist an dem vierten Profilschenkel ein zweites Anlageteil ausgeformt, welches den zweiten Deckelrand auf der Innenseite des Eimers hintergreift.

Vorteilhafterweise ist vorgesehen, dass das an dem ersten oder zweiten Eimerrand festgelegte Befestigungselement durch ein Verkippen des Befestigungselements in Richtung des Eimers gelöst werden kann, wobei durch eine elastische Verformung des ersten oder des zweiten Profilelements durch ein Öffnen der jeweiligen Profilschenkel zueinander das jeweilige Anlageteil von dem jeweiligen Eimerrand gelöst werden kann.

Eine vorteilhafte Ausgestaltung des Befestigungselements sieht vor, dass durch den zweiten Profilschenkel ein Anlageteil innerhalb des zweiten Profilelements ausgebildet wird. Der zweite Aufnahmebereich des Befestigungselements ist zwangsläufig größer als der erste Aufnahmebereich. Sind der erste und der dritte Profilschenkel in einem ersten Schenkelelement vereint, so liegt der zweite Profilschenkel annähernd innerhalb der Mitte des zweiten Aufnahmebereichs. Um beispielsweise die Formgebung der an dem ersten und vierten Profilschenkel angeordneten Anlageteile in Richtung eines Eimerbodens an den ersten und den zweiten Eimerrand anzupassen, kann der zweite Profilschenkel als Anlageteil für den zweiten Eimerrand innerhalb des zweiten Profilelements ausgebildet werden. Eine Länge des zweiten Profilschenkels sollte vorteilhafterweise an eine Höhe des ersten Deckelrands und eine Länge des vierten Profilschenkels an eine Höhe des zweiten Deckelrands angepasst sein.

Bei einer vorteilhaften Ausgestaltung des erfindungsgemäßen Befestigungselements ist vorgesehen, dass das erste und/oder das zweite Profilelement bereichsweise dem kreisbogenförmigen Verlauf folgend längs des Befestigungselements ausgebildet sind. Durch eine bereichsweise Ausbildung mindestens eines der Profilelemente längs des Befestigungselements kann das Befestigungselement leichter und kostengünstiger ausgeführt werden. Es ist möglich und erfindungsgemäß vorgesehen, dass das erste Profilelement durchgehend entlang des Kreisbogens des Befestigungselements ausgebildet ist und das zweite Profilelement bereichsweise entlang des Kreisbogens des Befestigungselements ausgebildet ist. Des Weiteren ist es möglich, dass das erste und das zweite Profilelement gemeinsam bereichsweise entlang des Kreisbogens des Befestigungselements ausgebildet sind.

Eine vorteilhafte Umsetzung des Erfindungsgedankens sieht vor, dass ein Radius des Kreisbogens, längs dessen sich das Befestigungselement erstreckt, an einen Eimerradius angepasst ist. Der Radius des Kreisbogens bzw. ein Radius des Befestigungselements ist an einen Radius des Eimers angepasst, an welchem das Befestigungselement festgelegt wird, so dass das Befestigungselement schnell und einfach auf dem jeweiligen Eimerrand festlegbar ist.

Die Erfindung betrifft auch ein Zubehörteil für einen Eimer mit einem wie vorangehend beschriebenen Befestigungselement.

Bei einer vorteilhaften Ausgestaltung des erfindungsgemäßen Zubehörteils ist vorgesehen, dass das Zubehörteil und das Befestigungselement einstückig ausgeführt sind. Es ist möglich und erfinderisch vorgesehen, dass das Zubehörteil mit dem Befestigungselement in einem Spritzgussverfahren hergestellt werden. Es ist jedoch auch möglich und erfindungsgemäß vorgesehen, dass das Zubehörteil an das Befestigungselement in dem Spritzgussverfahren angefügt oder angespritzt wird, oder dass das Befestigungselement in dem Spritzgussverfahren an das Zubehörteil angefügt oder angespritzt wird. Weiterhin ist es möglich und erfindungsgemäß vorgesehen, dass an dem Zubehörteil in der Umfangsrichtung weitere Zubehörteilmodule angefügt werden können.

Vorteilhafterweise ist vorgesehen, dass die bei bestimmungsgemäßer Verwendung des Zubehörteils dem Eimer zugewandte Seitenwand des Zubehörteils an die Formgebung des Eimers angepasst ist. Das Volumen eines Gefäßes, festgelegt als Zubehörteil an dem Eimer, kann bei gleichen Außenmaßen maximiert werden indem die dem Eimer zugewandte Seitenwand des Zubehörteils an den Eimer angepasst wird. Eine vorteilhafte Ausgestaltungsform des Zubehörteils wird mittels des Befestigungselements auf der Außenseite des Eimers festgelegt. Eine weitere vorteilhafte Ausgestaltungsform wird mittels des Befestigungselements auf der Innenseite des Eimers festgelegt. In einer weiteren vorteilhaften Ausgestaltungsform sind das Zubehörteil und das Befestigungselement mindestens zweiteilig ausgeführt, wobei das Zubehörteil eine erste Seite und eine zweite Seite aufweist, wobei die erste Seite an die Außenform des Eimers angepasst ist und wobei die zweite Seite an die Innenform des Eimers angepasst ist, wobei das Befestigungselement an der ersten und an der zweiten Seite lösbar festlegbar ist, um das Zubehörteil sowohl auf der Innenseite als auch auf der Außenseite des Eimers lösbar festlegen zu können. In einer weiteren vorteilhaften Ausgestaltungsform des Zubehörteils mit der ersten an die Außenform des Eimers angepassten Seite und der zweiten an die Innenform des Eimers angepassten Seite liegen die erste und die zweite Seite des Zubehörteils einander gegenüber.

Vorteilhafterweise handelt es sich bei dem Zubehörteil um ein Gefäß zur Aufnahme von Waschschwämmen oder Waschlappen. Das Gefäß weist eine Gefäßöffnung und einen der Gefäßöffnung gegenüberliegenden und mit einer einen Gefäßinnenraum umschließenden Gefäßwandung verbundenen Gefäßboden auf. In dem Gefäßboden kann erfindungsgemäß mindestens eine Ablauföffnung vorgesehen sein, durch die beispielsweise von einem Waschschwamm in den Gefäßinnenraum abtropfendes Waschwasser aus dem Gefäß ablaufen kann.

Die Erfindung betrifft auch einen Eimer mit einem wie vorangehend beschriebenen Zubehörteil.

Bei einer vorteilhaften Ausgestaltung des erfindungsgemäßen Eimers ist vorgesehen, dass der Eimer ein oberes offenes Ende und ein unteres geschlossenes Ende aufweist, wobei das obere offene Ende des Eimers den ersten Eimerrand bildet, wobei der erste Eimerrand den nach außen weisenden Falz aufweist, wobei das Befestigungselement bei bestimmungsgemäßer Verwendung lösbar an dem ersten Eimerrand festgelegt wird, wobei das erste Anlageteil des Befestigungselements den Falz des Eimers hintergreift, um ein Lösen des Zubehörteils von dem Eimer in Richtung des oberen offenen Endes des Eimers zu vermeiden. Das Zubehörteil wird mittels des Befestigungselements schnell und einfach an dem ersten Eimerrand befestigt und gegen das versehentliche Lösen von dem Eimer gesichert.

Eine vorteilhafte Umsetzung des Erfindergedankens sieht vor, dass auf dem ersten Eimerrand ein Deckelrand lösbar festgelegt ist, wobei der zweite Eimerrand durch den ersten Eimerrand mit dem festliegenden Deckelrand gebildet ist, wobei der Deckelrand auf einer Innenseite des Eimers formschlüssig anliegt, wobei eine Begrenzung des Deckelrands auf der Innenseite des Eimers liegend in Richtung des geschlossenen Endes des Eimers von einem zweiten Anlageteil des Befestigungselements hintergriffen wird, um ein Lösen des Zubehörteils von dem Eimer in Richtung des oberen offenen Endes des Eimers zu vermeiden. Das Zubehörteil wird mittels des Befestigungselements schnell und einfach an dem zweiten Eimerrand befestigt und gegen das versehentliche Lösen von dem Eimer gesichert. Nachfolgend werden einige Ausführungsbeispiele des Erfindungsgedankens näher erläutert, die in der Zeichnung dargestellt sind. Es zeigen:
Figur 1 eine schematische Darstellung eines Schnitts eines Befestigungselements, das an einem ersten Eimerrand festgelegt ist,
Figur 2 eine schematische Darstellung eines Schnitts des in Figur 1 gezeigten Befestigungselements, das an einem zweiten Eimerrand festgelegt ist,
Figur 3 und Figur 4 schematische Ansichten eines Zubehörteils mit dem integrierten Befestigungselement.

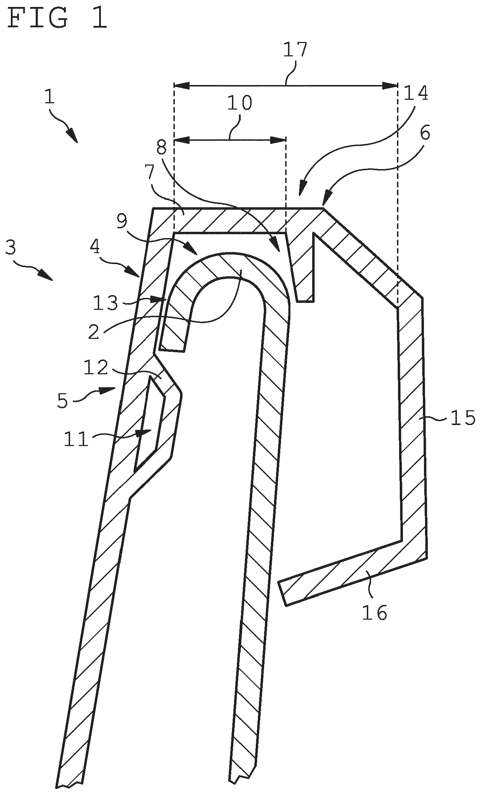

In Figur 1 ist ein erfindungsgemäßes Befestigungselement 1 schematisch dargestellt, das an einem ersten Eimerrand 2 festgelegt ist. Das Befestigungselement 1 weist ein erstes Schenkelelement 3 auf. Das erste Schenkelelement 3 bildet einen ersten Profilschenkel 4 und einen dritten Profilschenkel 5 aus. Das Befestigungselement 1 weist zudem ein zweites Schenkelelement 6 auf. Das zweite Schenkelelement 6 ist mit dem ersten Schenkelelement 3 über einen ersten Profilsteg 7 verbunden. Der erste Eimerrand 2 ist zwischen dem ersten Profilschenkel 4 und einem zweiten Profilschenkel 8 innerhalb des ersten Aufnahmebereichs 9 festgelegt. Der erste Profilschenkel 4 und der zweite Profilschenkel 8 weisen in einer radialen Richtung 27 einen ersten Mindestabstand 10 auf. Das erste Schenkelelement 3 bildet weiterhin eine Ausformung 11 aus, welche ein erstes Anlageteil 12 bildet. Das erste Anlageteil 12 hintergreift einen Falz 13 des ersten Eimerrands 2. Das Anlageteil 12 sichert das Befestigungselement 1 vor einem unbeabsichtigten Lösen von dem ersten Eimerrand 2. Der erste Profilsteg 7 formt einen Abschnitt eines zweiten Profilstegs 14 aus, wobei der zweite Profilsteg 14 das erste Schenkelelement 3 mit einem vierten Profilschenkel 15 verbindet. Der vierte Profilschenkel 15 weist ein zweites Anlageteil 16 auf, welches an dem ersten Eimerrand 2 anliegt. Der dritte Profilschenkel 5 und der vierte Profilschenkel 15 weisen einen zweiten Mindestabstand 17 zueinander auf.

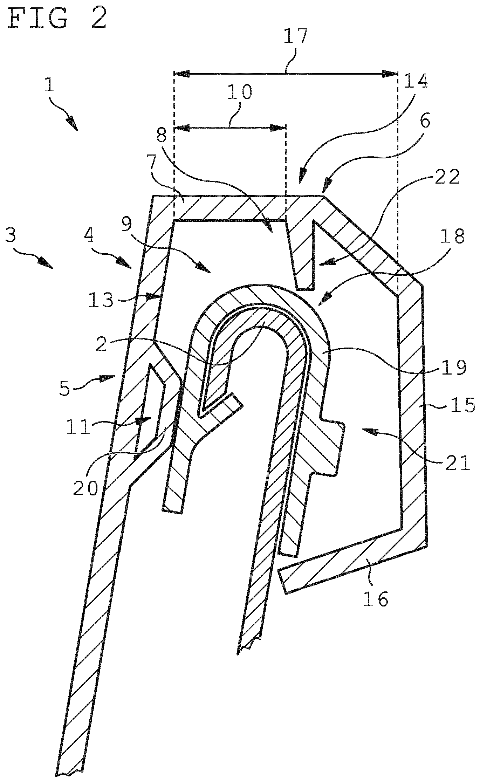

In Figur 2 ist das in Figur 1 schematisch dargestellte Befestigungselement 1 an einem zweiten Eimerrand 18 festgelegt dargestellt. Der zweite Eimerrand 18 wird aus dem ersten Eimerrand 2 mit einem festliegenden Deckelrand 19 gebildet. Der zweite Eimerrand 18 ist zwischen einem dritten Anlageteil 20 des dritten Profilschenkels 5 und dem zweiten Anlageteil 16 des vierten Profilschenkels 15 in einem zweiten Aufnahmebereich 21 festgelegt. Der zweite Profilschenkel 8 formt bezüglich des zweiten Eimerrands 18 ein viertes Anlageteil 22 aus. Das zweite Anlageteil 16 hintergreift den am ersten Eimerrand 2 festgelegten Deckelrand 19. Das Befestigungselement 1 wird derart vor dem Lösen von dem zweiten Eimerrand 18 gesichert.

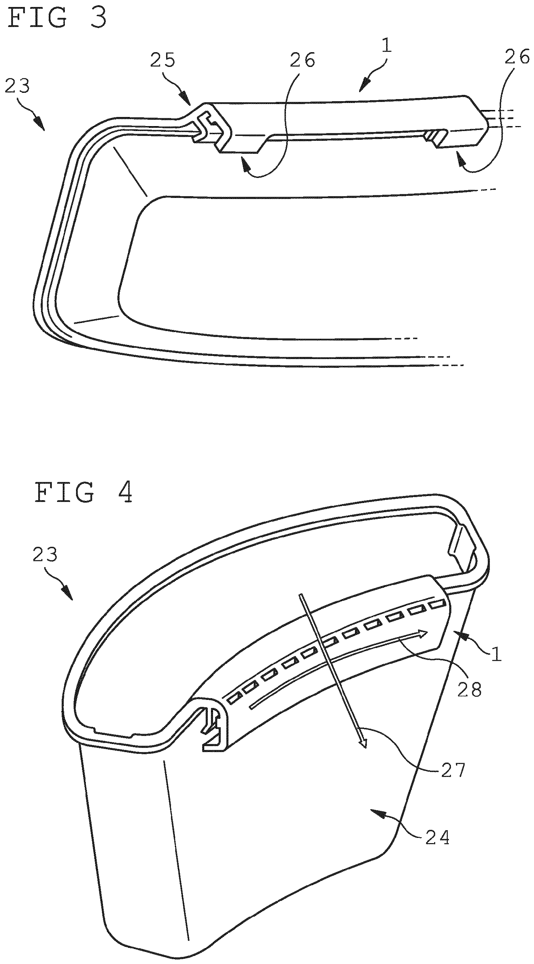

In Figur 3 ist schematisch eine Ansicht von unten auf ein Zubehörteil 23 und in Figur 4 eine schematische seitliche Ansicht des Zubehörteils 23 dargestellt. Sowohl das Befestigungselement 1 als auch die Innenwand 24 des Zubehörteils 23 sind an den Radius eines Eimers angepasst. Ein erstes Profilelement 25 ist entlang des gesamten Befestigungselements 1 und ein zweites Profilelement 26 nur bereichsweise ausgebildet. In der Darstellung sind eine radiale Richtung 27 und eine Umfangsrichtung 28 des Befestigungselements dargestellt.

### BEZUGSZEICHENLISTE

- 1: Befestigungselement
- 2: Erster Eimerrand
- 3: Erstes Schenkelelement
- 4: Erster Profilschenkel
- 5: Dritter Profilschenkel
- 6: Zweites Schenkelelement
- 7: Erster Profilsteg
- 8: Zweiter Profilschenkel
- 9: Erster Aufnahmebereich
- 10: Erster Mindestabstand
- 11: Ausformung
- 12: Erstes Anlageteil
- 13: Falz
- 14: Zweiter Profilsteg
- 15: Vierter Profilschenkel
- 16: Zweites Anlageteil
- 17: Zweiter Mindestabstand
- 18: Zweiter Eimerrand
- 19: Deckelrand
- 20: Drittes Anlageteil
- 21: Zweiter Aufnahmebereich
- 22: Viertes Anlageteil
- 23: Zubehörteil
- 24: Innenwand
- 25: Erstes Profilelement
- 26: Zweites Profilelement
- 27: Radiale Richtung
- 28: Umfangsrichtung

## Patentansprüche

1. Befestigungselement (1) eines Zubehörteils (23) für einen Eimer, wobei sich das Befestigungselement (1) längs eines Kreisbogens erstreckt, wobei das Befestigungselement (1) ein erstes Profilelement (25) mit einem U-förmigen Querschnitt mit durch einen ersten Profilsteg (7) miteinander verbundenen und einander gegenüberliegend angeordneten ersten (4) und zweiten (8) Profilschenkeln aufweist, wobei der erste (4) und der zweite Profilschenkel (8) in einem für den Eimer vorgesehenen ersten Aufnahmebereich (9) eines ersten Eimerrands (2) in einer radialen Richtung (27) des Befestigungselements (1) einen ersten Mindestabstand (10) zueinander aufweisen, wobei das Befestigungselement (1) ein zweites Profilelement (26) mit einem U-förmigen Querschnitt mit durch einen zweiten Profilsteg (14) miteinander verbundenen und einander gegenüberliegend angeordneten dritten (5) und vierten (15) Profilschenkeln aufweist, wobei der dritte (5) und der vierte (15) Profilschenkel in einem für den Eimer vorgesehenen zweiten Aufnahmebereich (21) eines zweiten Eimerrands (18) in der radialen Richtung (27) einen zweiten Mindestabstand (17) zueinander aufweisen, und wobei der zweite Mindestabstand (17) größer ist als der erste Mindestabstand (10), wobei an mindestens einem Profilschenkel (4, 5, 8, 15) mindestens ein Anlageteil (12, 16, 20, 22) ausgebildet ist, wobei das Anlageteil (12, 16, 20, 22) in Richtung des gegenüberliegenden Profilschenkels (4, 5, 8, 15) des jeweiligen Profilelements (25, 26) ausgerichtet ist, **dadurch gekennzeichnet, dass** das Befestigungselement (1) ein dem Zubehörteil (23) gegenüberliegendes erstes Schenkelelement (3) aufweist, wobei durch das erste Schenkelelement (3) jeweils ein Profilschenkel (4, 5) des ersten (25) und des zweiten (26) Profilelements ausgebildet wird, wobei an dem ersten Schenkelelement (3) eine Ausformung (11) ausgebildet ist, wobei die Ausformung (11) ein erstes Anlageteil (12) des ersten Profilelements (25) bildet und bei bestimmungsgemäßer Verwendung des Befestigungselements den ersten Eimerrand (2) hintergreifen kann, wobei die Ausformung (11) des ersten Schenkelelements (3) ein drittes Anlageteil (20) bezüglich des zweiten Eimerrands (18) bildet, wobei das erste Schenkelelement (3) unter einem stumpfen Winkel mit dem ersten Profilsteg (7) verbunden ist und wobei der erste Profilsteg (7) das erste Schenkelelement (3) mit einem zweiten Schenkelelement (6) verbindet, wobei das zweite Schenkelelement (6) den zweiten Profilschenkel (8) des ersten Profilelements (25) wie auch ein viertes Anlageteil (22) des zweiten Profilelements (26) bildet, wobei der erste Profilsteg (7) einen Abschnitt des zweiten Profilstegs (14) bildet und sich ein über den ersten Profilsteg (7) hinaus erstreckender Abschnitt des zweiten Profilstegs (14) unter einem stumpfen Winkel an den ersten Profilsteg (7) anschließt und wobei der zweite Profilsteg (14) das erste Schenkelelement (3) mit dem vierten Profilschenkel (15) unter einem stumpfen Winkel verbindet, wobei der vierte Profilschenkel (15) ein zweites Anlageteil (16) aufweist, welches den zweiten Eimerrand (18) bei bestimmungsgemäßer Verwendung des Befestigungselements hintergreifen kann.

2. Befestigungselement (1) eines Zubehörteils (23) für einen Eimer nach Anspruch 1, **dadurch gekennzeichnet, dass** der erste Profilsteg (7) des ersten Profilelements (25) einen Abschnitt des zweiten Profilstegs (14) des zweiten Profilelements (26) bildet.

3. Befestigungselement (1) eines Zubehörteils (23) für einen Eimer nach einem der vorangehenden Ansprüche, **dadurch gekennzeichnet, dass** durch die Profilschenkel (4, 5, 8, 15) verlaufende Ausgleichsebenen des ersten (25) und/oder des zweiten (26) U-förmigen Profilelements in einem Winkel von 0,1 bis 25 zueinander angeordnet sind, wobei sich der Abstand der Profilschenkel (4, 5, 8, 15) mit zunehmendem Abstand von dem jeweiligen Profilsteg (7, 14) vergrößert.

4. Befestigungselement (1) eines Zubehörteils (23) für einen Eimer nach einem der vorangehenden Ansprüche, **dadurch gekennzeichnet, dass** ein Anlageteil (22) durch den zweiten Profilschenkel (8) des zweiten Profilelements (26) ausgebildet ist.

5. Befestigungselement (1) eines Zubehörteils (23) für einen Eimer nach einem der vorangehenden Ansprüche, **dadurch gekennzeichnet, dass** das erste (25) und/oder das zweite (26) Profilelement bereichsweise dem kreisbogenförmigen Verlauf folgend längs des Befestigungselements (1) ausgebildet sind.

6. Befestigungselement (1) eines Zubehörteils (23) nach einem der vorangehenden Ansprüche, **dadurch gekennzeichnet, dass** ein Radius des Kreisbogens, längs dessen sich das Befestigungselement (1) erstreckt, an einen Eimerradius angepasst ist.

7. Zubehörteil (23) für einen Eimer mit einem Befestigungselement nach einem der vorangehenden Ansprüche, **dadurch gekennzeichnet, dass** das Zubehörteil (23) und das Befestigungselement (1) einstückig ausgeführt sind.

8. Zubehörteil (23) für einen Eimer mit einem Befestigungselement nach einem der Ansprüche 1 bis 6 oder Zubehörteil nach Anspruch 7, **dadurch gekennzeichnet, dass** die bei bestimmungsgemäßer Verwendung des Zubehörteils (23) dem Eimer zugewandte Seitenwand (24) des Zubehörteils (23) an die Formgebung des Eimers angepasst ist.

9. Eimer mit einem Zubehörteil nach Anspruch 7 oder Anspruch 8, **dadurch gekennzeichnet, dass** der Eimer ein oberes offenes Ende und ein unteres geschlossenes Ende aufweist, wobei das obere offene Ende des Eimers den ersten Eimerrand (2) bildet, wobei der erste Eimerrand (2) einen nach außen weisenden Falz (13) aufweist, wobei das Befestigungselement (1) bei bestimmungsgemäßer Verwendung lösbar an dem ersten Eimerrand (2) festgelegt wird, wobei ein erstes Anlageteil (12) des Befestigungselements (1) den Falz (13) des Eimers hintergreift, um ein Lösen des Zubehörteils (23) von dem Eimer in Richtung des oberen offenen Endes des Eimers zu vermeiden.

10. Eimer mit einem Zubehörteil nach Anspruch 7 oder Anspruch 8 oder Eimer nach Anspruch 9, **dadurch gekennzeichnet, dass** auf dem ersten Eimerrand (1) ein Deckelrand (19) lösbar festgelegt ist, wobei der zweite Eimerrand (18) durch den ersten Eimerrand (2) mit dem festliegenden Deckelrand (19) gebildet ist, wobei der Deckelrand (19) auf einer Innenseite des Eimers formschlüssig anliegt, wobei eine Begrenzung des Deckelrands (19) auf der Innenseite des Eimers liegend in Richtung des geschlossenen Endes des Eimers von einem zweiten Anlageteil (16) des Befestigungselements (1) hintergriffen wird, um ein Lösen des Zubehörteils (23) von dem Eimer in Richtung des oberen offenen Endes des Eimers zu vermeiden.

## Claims

1. Fastening element (1) of an accessory part (23) for a pail, wherein the fastening element (1) extends along a circular arc, wherein the fastening element (1) comprises a first profile element (25) having a U-shaped cross-section with first (4) and second (8) profile legs, which are interconnected by a first profile web (7) and are arranged opposite one another, wherein the first (4) and the second (8) profile legs have a first minimum distance (10) from one another in a radial direction (27) of the fastening element (1) in a first receiving region (9) for a first pail edge (2), which first receiving region is provided for the pail, wherein the fastening element (1) comprises a second profile element (26) having a U-shaped cross-section with third (5) and fourth (15) profile legs, which are interconnected by a second profile web (14) and are arranged opposite one another, wherein the third (5) and the fourth (15) profile legs have a second minimum distance (17) from one another in the radial direction (27) in a second receiving region (21) for a second pail edge (18), which second receiving region is provided for the pail, and wherein the second minimum distance (17) is greater than the first minimum distance (10), wherein at least one abutment part (12, 16, 20, 22) is formed on at least one profile leg (4, 5, 8, 15), wherein the abutment part (12, 16, 20, 22) is oriented towards the opposite profile leg (4, 5, 8, 15) of the respective profile element (25, 26), **characterised in that** the fastening element (1) has a first leg element (3) opposite the accessory part (23), wherein a profile leg (4, 5) of each of the first (25) and the second (26) profile element is formed by the first leg element (3), wherein a shaped portion (11) is formed on the first leg element (3), wherein the shaped portion (11) forms a first abutment part (12) of the first profile element (25) and, when the fastening element is used as intended, is able to engage behind the first pail edge (2), wherein the shaped portion (11) of the first leg element (3) forms a third abutment part (20) relative to the second pail edge (18), wherein the first leg element (3) is connected to the first profile web (7) at an obtuse angle and wherein the first profile web (7) connects the first leg element (3) to a second leg element (6), wherein the second leg element (6) forms the second profile leg (8) of the first profile element (25) as well as a fourth abutment part (22) of the second profile element (26), wherein the first profile web (7) forms a portion of the second profile web (14) and attaches a portion of the second profile web (14) that extends beyond the first profile web (7) to the first profile web (7) at an obtuse angle, and wherein the second profile web (14) connects the first leg element (3) to the fourth profile leg (15) at an obtuse angle, wherein the fourth profile leg (15) has a second abutment part (16) which, when the fastening element is used as intended, can engage behind the second pail edge (18).

2. Fastening element (1) of an accessory part (23) for a pail according to claim 1, **characterised in that** the first profile web (7) of the first profile element (25) forms a portion of the second profile web (14) of the second profile element (26).

3. Fastening element (1) of an accessory part (23) for a pail according to one of the preceding claims, **characterised in that** correction planes of the first (25) and/or the second (26) U-shaped profile element, which planes extend through the profile legs (4, 5, 8, 15), are arranged at an angle of from 0.1 to 25 to one another, wherein the distance between the profile legs (4, 5, 8, 15) increases as the distance from the respective profile web (7, 14) increases.

4. Fastening element (1) of an accessory part (23) for a pail according to one of the preceding claims, **characterised in that** an abutment part (22) is formed by the second profile leg (8) of the second profile element (26).

5. Fastening element (1) of an accessory part (23) for a pail according to one of the preceding claims, **characterised in that** the first (25) and/or the second (26) profile element is formed along the fastening element (1) in certain regions so as to follow the circular-arc shape.

6. Fastening element (1) of an accessory part (23) according to one of the preceding claims, **characterised in that** a radius of the circular arc along which the fastening element (1) extends is adapted to a pail radius.

7. Accessory part (23) for a pail comprising a fastening element according to one of the preceding claims, **characterised in that** the accessory part (23) and the fastening element (1) are formed in one piece.

8. Accessory part (23) for a pail comprising a fastening element according to one of claims 1 to 6 or accessory part according to claim 7, **characterised in that** the side wall (24) of the accessory part (23) which faces the pail when the accessory part (23) is used as intended is adapted to the shape of the pail.

9. Pail comprising an accessory part according to claim 7 or claim 8, **characterised in that** the pail has an upper open end and a lower closed end, wherein the upper open end of the pail forms the first pail edge (2), wherein the first pail edge (2) comprises an outwardly-facing fold (13), wherein the fastening element (1) is detachably fixed to the first pail edge (2) when used as intended, wherein a first abutment part (12) of the fastening element (1) engages behind the fold (13) of the pail in order to prevent the accessory part (23) from becoming detached from the pail in the direction of the upper open end of the pail.

10. Pail comprising an accessory part according to claim 7 or claim 8 or pail according to claim 9, **characterised in that** a lid edge (19) is detachably fixed on the first pail edge (1), wherein the second pail edge (18) is formed by the first pail edge (2) together with the fixed lid edge (19), wherein the lid edge (19) abuts an inner face of the pail in a form-fitting manner, wherein a second abutment part (16) of the fastening element (1) engages behind a boundary of the lid edge (19) in the direction of the closed end of the pail so as to rest on the inner face of the pail, in order to prevent the accessory part (23) from becoming detached from the pail in the direction of the upper open end of the pail.

## Revendications

1. Élément de fixation (1) d'un accessoire (23) destiné à un seau, dans lequel l'élément de fixation (1) s'étend le long d'un arc de cercle, l'élément de fixation (1) comportant un premier élément profilé (25) avec une section transversale en forme de U doté d'une première (4) et d'une deuxième (8) aile de profilé reliées l'une à l'autre par une première âme de profilé (7) et disposées opposées l'une à l'autre, la première (4) et la deuxième (8) aile de profilé présentant, dans une première zone de réception (9) d'un premier bord de seau (2) prévue pour le seau, dans une direction radiale (27) de l'élément de fixation (1), une première distance minimale (10) entre elles, l'élément de fixation (1) comportant un deuxième élément profilé (26) avec une section transversale en forme de U doté d'une troisième (5) et d'une quatrième (15) aile de profilé reliées l'une à l'autre par une deuxième âme de profilé (14) et disposées opposées l'une à l'autre, la troisième (5) et la quatrième (15) aile de profilé présentant, dans une deuxième zone de réception (21) d'un deuxième bord de seau (18) prévue pour le seau, dans la direction radiale (27), une deuxième distance minimale (17) entre elles, et la deuxième distance minimale (17) étant supérieure à la première distance minimale (10), au moins une partie d'appui (12, 16, 20, 22) étant formée sur au moins une aile de profilé (4, 5, 8, 15), la partie d'appui (12, 16, 20, 22) étant orientée dans la direction de l'aile de profilé (4, 5, 8, 15) opposée de l'élément profilé (25, 26) respectif, **caractérisé en ce que** l'élément de fixation (1) comporte un premier élément d'aile (3) opposé à l'accessoire (23), une aile de profilé (4, 5) du premier (25) et du deuxième (26) élément de profilé étant respectivement formée par le premier élément d'aile (3), une forme (11) étant formée sur le premier élément d'aile (3), la forme (11) formant une première partie d'appui (12) du premier élément de profilé (25) et pouvant, lors de l'utilisation conforme de l'élément de fixation, venir en prise par derrière avec le premier bord de seau (2), la forme (11) du premier élément d'aile (3) formant une troisième partie d'appui (20) par rapport au deuxième bord de seau (18), le premier élément d'aile (3) étant relié à la première âme de profilé (7) en formant un angle obtus et la première âme de profilé (7) reliant le premier élément d'aile (3) à un deuxième élément d'aile (6), le deuxième élément d'aile (6) formant la deuxième aile de profilé (8) du premier élément de profilé (25) ainsi qu'une quatrième partie d'appui (22) du deuxième élément de profilé (26), la première âme de profilé (7) formant une portion de la deuxième âme de profilé (14) et une portion de la deuxième âme de profilé (14), qui s'étend au-delà de la première âme de profilé (7), succédant à la première âme de profilé (7) en formant un angle obtus et la deuxième âme de profilé (14) reliant le premier élément d'aile (3) à la quatrième aile de profilé (15) en formant un angle obtus, la quatrième aile de profilé (15) comportant une deuxième partie d'appui (16), qui, lors de l'utilisation conforme de l'élément de fixation, peut venir en prise par derrière avec le deuxième bord de seau (18).

2. Élément de fixation (1) d'un accessoire (23) destiné à un seau selon la revendication 1, **caractérisé en ce que** la première âme de profilé (7) du premier élément de profilé (25) forme une portion de la deuxième âme de profilé (14) du deuxième élément de profilé (26).

3. Élément de fixation (1) d'un accessoire (23) destiné à un seau selon l'une des revendications précédentes, **caractérisé en ce que** des plans d'équilibrage du premier (25) et/ou du deuxième (26) élément de profilé en forme de U s'étendant à travers les ailes de profilé (4, 5, 8, 15) sont disposés l'un par rapport à l'autre selon un angle de 0,1 à 25, la distance entre les ailes de profilé (4, 5, 8, 15) augmentant au fur et à mesure que la distance avec l'âme de profilé (7, 14) respective augmente.

4. Élément de fixation (1) d'un accessoire (23) destiné à un seau selon l'une des revendications précédentes, **caractérisé en ce qu'**une partie d'appui (22) est formée par la deuxième aile de profilé (8) du deuxième élément de profilé (26).

5. Élément de fixation (1) d'un accessoire (23) destiné à un seau selon l'une des revendications précédentes, **caractérisé en ce que** le premier (25) et/ou le deuxième (26) élément de profilé sont formés, dans certaines zones, le long de l'élément de fixation (1) en suivant le tracé en forme d'arc de cercle.

6. Élément de fixation (1) d'un accessoire (23) selon l'une des revendications précédentes, **caractérisé en ce qu'**un rayon de l'arc de cercle, le long duquel s'étend l'élément de fixation (1), est adapté à un rayon de seau.

7. Accessoire (23) destiné à un seau, comprenant un élément de fixation selon l'une des revendications précédentes, **caractérisé en ce que** l'accessoire (23) et l'élément de fixation (1) sont réalisés d'un seul tenant.

8. Accessoire (23) destiné à un seau, comprenant un élément de fixation selon l'une des revendications 1 à 6 ou accessoire selon la revendication 7, **caractérisé en ce que** la paroi latérale (24) de l'accessoire (23) orientée vers le seau lors de l'utilisation conforme de l'accessoire (23), est adaptée à la forme du seau.

9. Seau comprenant un accessoire selon la revendication 7 ou la revendication 8, **caractérisé en ce que** le seau comporte une extrémité supérieure ouverte et une extrémité inférieure fermée, l'extrémité supérieure ouverte du seau formant le premier bord de seau (2), le premier bord de seau (2) comportant un pli (13) orienté vers l'extérieur, l'élément de fixation (1) étant, lors de l'utilisation conforme, fixé de manière libérable au premier bord de seau (2), une première partie d'appui (12) de l'élément de fixation (1) venant en prise par derrière avec le pli (13) du seau, pour empêcher que l'accessoire (23) se détache du seau dans la direction de l'extrémité supérieure ouverte du seau.

10. Seau comprenant un accessoire selon la revendication 7 ou la revendication 8 ou seau selon la revendication 9, **caractérisé en ce qu'**un bord de couvercle (19) est fixé de manière libérable sur le premier bord de seau (1), le deuxième bord de seau (18) étant formé par le premier bord de seau (2) avec le bord de couvercle (19) fixé, le bord de couvercle (19) s'appliquant avec complémentarité de forme contre une face intérieure du seau, une limite du bord de couvercle (19) sur la face intérieure du seau étant saisie par derrière horizontalement en direction de l'extrémité fermée du seau par une deuxième partie d'appui (16) de l'élément de fixation (1), pour empêcher que l'accessoire (23) se détache du seau en direction de l'extrémité supérieure ouverte du seau.
